(19) Europäisches Patentamt
European Patent Office
Office européen des brevets

(11) **EP 1 832 858 A1**

(12) **EUROPEAN PATENT APPLICATION**
published in accordance with Art. 158(3) EPC

(43) Date of publication:
**12.09.2007 Bulletin 2007/37**

(51) Int Cl.:
***G01G 19/387*** (2006.01)

(21) Application number: **05809459.0**

(22) Date of filing: **21.11.2005**

(86) International application number:
**PCT/JP2005/021356**

(87) International publication number:
**WO 2006/057215 (01.06.2006 Gazette 2006/22)**

(84) Designated Contracting States:
**DE FR GB**

(30) Priority: **26.11.2004 JP 2004341754**

(71) Applicant: **Kawanishi, Shozo**
**Nishinomiya-shi**
**Hyogo 6620088 (JP)**

(72) Inventors:
• **SHOZO, Kawanishi**
**Hyogo 662-0088 (JP)**

• **HIROSHI, Higuchi**
**Hyogo 676-0825 (JP)**
• **TAKETOSHI, Okamura**
**Hyogo 659-0014 (JP)**

(74) Representative: **Piésold, Alexander James**
**Frank B. Dehn & Co.**
**St Bride's House**
**10 Salisbury Square**
**London EC4Y 8JD (GB)**

(54) **COMBINATION SCALE**

(57) A combination weigher of the present invention comprises a plurality of discharge hoppers which hold objects to be weighed; weight detecting devices for detecting measured values of weights of the objects to be weighed which are held in or fed to the discharge hoppers; and a controller; wherein the controller is configured to select an optimal composite combination from composite combinations each of which chooses a plurality of combinations made up of the measured values such that elements of the measured values do not duplicate between the combinations (step S3 to S4). In such a configuration, in the combination weigher configured to simultaneously select a plurality of combinations each of which chooses a certain number of measured values from a plurality of measured values, weighing precision can be improved without changing number of ganged units, or the number of ganged units can be reduced while maintaining the weighing precision.

FEED OBJECTS TO BE WEIGHED TO
EMPTY WEIGHING HOPPER 4 — S1

DETECT WEIGHT OF OBJECTS TO BE WEIGHED
INSIDE WEIGHING HOPPER 4 AND
UPDATE MEASURED VALUE — S2

CALCULATE TOTAL ERROR WITH
RESPECT TO ALL COMPOSITE
COMBINATIONS — S3

SELECT COMPOSITE COMBINATION
WHOSE TOTAL ERROR IS SMALLEST — S4

FEED OBJECTS TO BE WEIGHED FROM
WEIGHING HOPPER 4 PARTICIPATING IN FIRST
COMBINATION TO COLLECTING CHUTE 6A — S5

FEED OBJECTS TO BE WEIGHED FROM WEIGHING
HOPPER 4 PARTICIPATING IN SECOND
COMBINATION TO COLLECTING CHUTE 6B — S6

DISCHARGE OBJECTS TO BE WEIGHED
FROM COLLECTING HOPPER 7A — S7

DISCHARGE OBJECTS TO BE WEIGHED
FROM COLLECTING HOPPER 7B — S8

FIG. 4

EP 1 832 858 A1

## Description

### Technical Field

The present invention relates to a combination weigher. More particularly, the present invention relates to a combination weigher which utilizes composite combination calculation.

### Background Art

One example of a conventional combination weigher which simultaneously selects a plurality of combinations each of which chooses a certain number of measured values from a plurality of measured values, is disclosed in a patent document 1. (As used herein, the terms "simultaneously select" means that measured values that participate in one combination are not allowed to participate in another combination, that is, participant elements do not duplicate in a plurality of combinations.") The combination weigher disclosed in the patent document 1 includes a plurality of weighing hoppers, and is configured to measure weights of objects to be weighed which have been fed to the weighing hoppers and to perform combination calculation using obtained measured values. In this case, first, combination calculation is performed using an arbitrary number of measured values and the objects to be weighed are discharged from the selected weighing hoppers. Secondly, the combination calculation is performed using an arbitrary number of measured values chosen from remaining measured values, and the objects to be weighed are discharged from selected weighing units. Patent Document 1: Japanese Examined Patent Application Publication No. Hei. 8 - 1395

### Disclosure of the Invention

### Problems to be Solved by the Invention

In combination weighers, it is essential that weighing precision and weighing speed be improved. As the number (hereinafter referred to as number of ganged units) of the weighing hoppers is increased, measured values for selection are increased, making it easy to bring a total weight of measured values that participate in a combination closer to a target weight. In other words, precision of the combination weigher is improved as the number of ganged units is increased. However, if the number of ganged units is increased, then the size and cost of the combination weigher are increased. Also, if the size of the combination weigher is increased, then a distance over which the objects to be weighed are caused to move inside a chute and the like becomes large. This increases a time interval from one discharge to next discharge. In brief, by increasing the number of ganged units, the weighing precision is improved but time spent in one weighing cycle (from when the objects to be weighed start to be fed to the weighing hopper until they are discharged to a packaging machine) is increased.

The present invention has been made to solve the above described problems, and an object of the present invention is to improve the weighing precision without changing the number of ganged units or to reduce the number of ganged units while maintaining the weighing precision in a combination weigher configured to simultaneously select a plurality of combinations each of which chooses a certain number of measured values from a plurality of measured values.

### Means for Solving the Problems

To achieve the above described object, a combination weigher of the present invention comprises a plurality of discharge hoppers which hold objects to be weighed; weight detecting devices for detecting measured values of weights of the objects to be weighed which are held in or fed to the discharge hoppers; and a controller; wherein the controller is configured to select an optimal composite combination from composite combinations each of which chooses a plurality of combinations made up of the measured values such that elements of the measured values do not duplicate between the combinations (claim 1). Thereby, a plurality of weighing hoppers can be selected such that a whole error is made smaller. Therefore, the weighing precision can be improved without changing the number of ganged units. Or, the number of ganged units can be reduced while maintaining the weighing precision.

The controller may be configured to cause the discharge hoppers participating in the combinations forming the optimal composite combination to discharge the objects to be weighed simultaneously (claim 2). Thereby, the objects to be weighed can be discharged simultaneously to a plurality of packaging machine, and weighing speed can be improved.

The combination weigher may further comprise a plurality of collecting chutes (claim 3). Thereby, a plurality of discharge paths can be created.

The controller may be configured to cause the discharge hoppers participating in the combinations forming the optimal composite combination to discharge the objects to be weighed simultaneously; and wherein the number of combinations selected simultaneously may be two and the number of collecting chutes may be two (claim 4). Thereby, discharging can be performed from two combinations in one weighing cycle. As a result, weighing speed can be improved.

Each of the discharge hoppers may be provided with two gates which are selectively openable and closable; and the controller may be configured to select one of the gates to be opened to select one of the collecting chutes to which the objects to be weighed are fed (claim 5). Thereby, discharging can be performed from the two combinations to different discharge paths.

The combination weigher may further comprise a selecting device disposed below the discharge hoppers; and the controller may cause the selecting device to select one of the collecting chutes to which the objects to be weighed are fed (claim 6). Thereby, the objects to be weighed can be discharged selectively to each of three or more discharge paths.

The combination weigher may further comprise intermediate hoppers disposed below the discharge hoppers; and the controller may cause the intermediate hopper to select one of the collecting chutes to which the objects to be weighed are fed (claim 7). Thereby, the objects to be weighed can be discharged selectively to each of three or more discharge paths.

The combination weigher may further comprise collecting hoppers provided at the collecting chutes (claim 8). Thereby, the objects to be weighed discharged to the collecting chute can be temporarily held. This makes it possible to discharge the objects to be weighed according to timing of the packaging machine.

The combination weigher may further comprise a second collecting chute disposed below the collecting hoppers; and the number of the second collecting chute may be less than the number of combinations selected simultaneously (claim 9).

This makes it possible to discharge the objects to be weighed according to the number or timing of the packaging machines.

The number of the second collecting chute may be one (claim 10).

Thereby, the objects to be weighed can be discharged at a high speed to enable the combination weigher to be adapted to a high-speed operation cycle of the packaging machine.

The controller may cause the collecting hoppers to sequentially discharge the objects to be weighed held therein in one weighing cycle (claim 11). Thereby, the objects to be weighed can be discharged at a high speed to enable the combination weigher to be adapted to a high-speed operation cycle of the packaging machine.

One of the collecting chutes may not be provided with a collecting hopper and remaining collecting chutes may be provided with collecting hoppers (claim 12). Thereby, the objects to be weighed are directly discharged from the collecting chute which is not provided with the collecting hopper.

A combination target weight corresponding to at least one combination may be different from a combination target weight corresponding to another combination in combinations selected simultaneously (claim 13). Thereby, the objects to be weighed can be discharged according to a plurality of target weights.

The combination weigher may further comprise weighing hoppers, and the discharge hoppers may be the weighing hoppers (claim 14). Thereby, the composite combination calculation can be performed using the weights of the objects to be weighed held in the weighing hoppers as the measured values.

Each of the weighing hoppers may include two chambers (claim 15). This makes it possible to significantly reduce the number of weight detecting devices relative to the number of the measured values.

The combination weigher may further comprise weighing hoppers; and a plurality of memory hoppers provided for each of the weighing hoppers; and the discharge hoppers may be memory hoppers (claim 16). This makes it possible to significantly reduce the number of the weighing hoppers and the number of the weight detecting devices relative to the number of the measured values.

The controller may cause the combination weigher to perform a double shift operation (claim 17). Thereby, the weighing speed can be improved.

Combinations selected simultaneously in first shift may be equal in number to combinations selected simultaneously in second shift (claim 18). This makes it easy to establish synchronization between different shifts.

Hereinbelow, definitions of terms used in claims and description will be described.

The terms "weight detecting device" recited in claims and description refer to a device for detecting weight of the objects to be weighed, more specifically to a weight sensor or the like for detecting weight of the objects to be weighed held in a weighing hopper or a weighing feeder.

The terms "discharge hopper" recited in claims and description refer to a hopper which participate in a combination, more specifically, which may be a weighing hopper or a memory hopper located downstream of the weighing hopper, or otherwise a combination of them. The weighing hopper may be a weighing hopper including two chambers. When the weighing hopper including two chambers is used, the weights of the objects to be weighed held in the respective chambers are used as the measured values. In other words, one weighing hopper substantially serves as two weighing hoppers. However, the objects to be weighed cannot be discharged to both of the chambers from upstream of the weighing hopper. Therefore, the operation in that case is different from the operation of two separate weighing hoppers in that the number of measured values is in some cases less than the number of chambers of the weighing hopper.

The term "combination" recited in claims and description means choosing of one or more measured values from a number of measured values.

The terms "composite combination" recited in claims and description mean choosing of a plurality of combinations made up of measured values from a number of measured values such that elements do not duplicate between the combinations.

The above and further objects, features and advantages of the present invention will more fully be apparent from the following detailed description of the preferred embodiment with reference to accompanying drawings.

Effects of the Invention

The present invention has the above described configuration, and provides a combination weigher which is capable of improving the weighing precision without changing the number of ganged units or of reducing the number of ganged units while maintaining the weighing precision.

**Brief Description of the Drawings**

[Fig. 1] Fig. 1 is a view showing an example in which two combinations each choosing four measured values from twelve measured values are selected simultaneously by sequential combination calculation and by composite combination calculation;

[Fig. 2] Fig. 2 is a cross-sectional view of a schematic construction of a hardware of a combination weigher according to an embodiment of the present invention, as viewed from laterally;

[Fig. 3] Fig. 3 is a block diagram showing a schematic configuration of a control system and a control board of the combination weigher according to the embodiment of the present invention;

[Fig. 4] Fig. 4 is a flowchart showing an example of an operation program of the control board of the combination weigher according to the embodiment of the present invention;

[Fig. 5] Fig. 5 is a schematic view showing a construction in which a plurality of collecting chutes cross each other in a combination weigher according to an alternative example 1 of the embodiment of the present invention;

[Fig. 6] Fig. 6 is a cross-sectional view showing a schematic construction of a combination weigher according to an alternative example 2 of the embodiment of the present invention, which is equipped with a selecting device, and four collecting chutes and four collecting hoppers, as viewed from laterally;

[Fig. 7] Fig. 7 is a cross-sectional view showing a schematic construction of a combination weigher according to an alternative example 3 of the embodiment of the present invention, which is equipped with four collecting chutes and four collecting hoppers, as viewed from laterally;

[Fig. 8] Fig. 8 is a view schematically showing a part of a schematic construction of a combination according to an alternative example 4 of the embodiment of the present invention;

[Fig. 9] Fig. 9 is a view schematically showing a part of a schematic construction of a combination weigher according to an alternative example 5 of the embodiment of the present invention, in which two memory hoppers are porvided for each weighing hopper;

[Fig. 10] Fig. 10 is a view schematically showing a part of a schematic construction of a combination weigher according to an alternative example 6 of the embodiment of the present invention, which is equipped with three collecting hoppers, two second collecting chutes and two second collecting hoppers; and

[Fig. 11] Fig. 11 is a view schematically showing a part of a schematic construction of a combination weigher according to an alternative example 6 of the embodiment of the present invention, which is equipped with two collecting chutes, two collecting hoppers, one second collecting chute and one second collecting hopper.

**Explanation of Reference Numbers**

| | |
|---|---|
| 1 | dispersion feeder |
| 2 | linear feeder |
| 3 | feeding hopper |
| 4 | weighing hopper |
| 5 | weight sensor |
| 6A to 6D | collecting chute |
| 7A to 7D | collecting hopper |

| 8 | control board |
| 9 | input/output means |
| 10 | control unit |
| 11 | storage unit |
| 12 | selecting device |
| 13 | intermediate hopper |
| 14 | memory hopper |
| 15 | second collecting chute |
| 16 | second collecting hopper |

**Best Mode for Carrying Out the Invention**

Now, a preferred embodiment of the present invention will be described with reference to the drawings.

**(Principle of the Present Invention)**

First of all, a principle of the present invention will be described below.

As an example in which a plurality of combinations each of which chooses a certain number of measured values from a number of measured values are selected simultaneously, consider a case where two combinations each of which chooses four measured values from twelve measured values are selected simultaneously. Here it is assumed that a weighing target weight (hereinafter referred to as combination target weight) is 40 grams and each measured value is approximately 10 grams. Weighing condition is that a combination whose combination target weight is closest to 40 grams is selected as an optimal combination from combinations whose combination target weights are 40 grams or more. Hereinbelow, numbers are respectively assigned to elements, and a set of the elements is represented by {1, 2, 3, 4, 5, 6, 7, 8, 9, 10, 11, 12}. Also, the combination is represented by arranging the numbers of the participant elements in numeric order, for example, {1, 2, 3, 4}.

Typically, with respect to each of combinations:

$$(1, 2, 3, 4),$$
$$(1, 2, 3, 5),$$
$$(1, 2, 3, 6),$$
$$...,$$
$$(9, 10, 11, 12),$$

a total measured value (combination total weight) is calculated, and an optimal combination is selected from these combinations as a first combination. The number of combinations that are examined to select the first combination is $_{12}C_4$ = 495 in number of cases.

Subsequently, from combination total weights created by choosing a certain number of measured values from the remaining measured values, an optimal combination is selected as a second combination. For example, if the first combination is (3, 5, 6, 12), then the optimal combination is selected as the second combination, from combinations each of which chooses four measured values from a set of elements consisting of the remaining measured values {1, 2, 4, 7, 8, 9, 10, 11}:

$$(1, 2, 4, 7),$$
$$(1, 2, 4, 8),$$
$$(1, 2, 4, 9),$$
$$...,$$
$$(8, 9, 10, 11).$$

The number of combinations that are examined to select the second combination is 8C4 = 70 in number of cases. Such a calculation method is hereinbelow referred to as sequential combination calculation. The number of cases calculated actually in this method is 495 + 70 = 565.

In contrast to the above, in the present invention, comparison is made among all sets each including two combinations each of which chooses four measured values from twelve measured values, which sets will hereinafter be referred to as composite combinations, and it is determined which of the composite combinations is most desirable. Below, a composite combination which chooses two combinations each of which chooses four measured values from the set {1, 2, 3, 4, 5,6, 7, 8, 9, 10, 11, 12} is represented by, for example, [(1, 2, 3, 4), (5, 6, 7, 8)]. Composite combinations are arranged in respective sets of measured values participating in the composite combinations as follows:

$$[(1, 2, 3, 4), (5, 6, 7, 8)],$$
$$[(1, 2, 3, 5), (4, 6, 7, 8)],$$
$$[(1, 2, 3, 6), (4, 5, 7, 8)],$$
$$...,$$
$$[(1, 2, 3, 4), (5, 6, 7, 9)],$$
$$[(1, 2, 3, 5), (4, 6, 7, 9)],$$
$$[(1, 2, 3, 6), (4, 5, 7, 9)],$$
$$...,$$
$$[(5, 6, 7, 8), (9, 10, 11, 12)],$$
$$[(5, 6, 7, 9), (8, 10, 11, 12)],$$
$$[(5, 6, 7, 10), (8, 9, 11, 12)],$$
$$...,$$
$$[(5, 10, 11, 12), (6, 7, 8, 9)].$$

In these composite combinations, the combination made up of participant measured values whose smallest number is smaller is positioned on the left side as the first combination. In the present invention, an optimal composite combination is selected from these composite combinations. The number of composite combinations is as follows. With respect to each of the combinations (12C8 = 495 in number of cases) which chooses $4 \times 2 = 8$ elements which participate in the composite combination from the twelve elements, number of cases for selections as to which of the eight elements participate in the first combination is 8C4 = 70. Since the first combination and the second combination are not distinguished from each other in the latter, the number will be reduced to half because of duplication. Therefore, the number of composite combinations (number of cases actually calculated) is 12C8 $\times$ 8C4 $\times$ 1/2 = 17325. The above described calculation is hereinafter referred to as composite combination calculation.

Any selecting conditions may be used so long as an optimal composite combination is selected from all the composite combinations. For example, it may be determined that a composite combination in which respective combination total weights are not less than a certain weight and a total of differences (hereinafter referred to as errors) between the combination total weights and a combination target weight is smallest is optimal. Alternatively, it may be determined that a composite combination in which a total of absolute values of errors is smallest is optimal. In a further alternative, it may be determined that a composite combination in which a total of the squares of the errors is smallest is optimal.

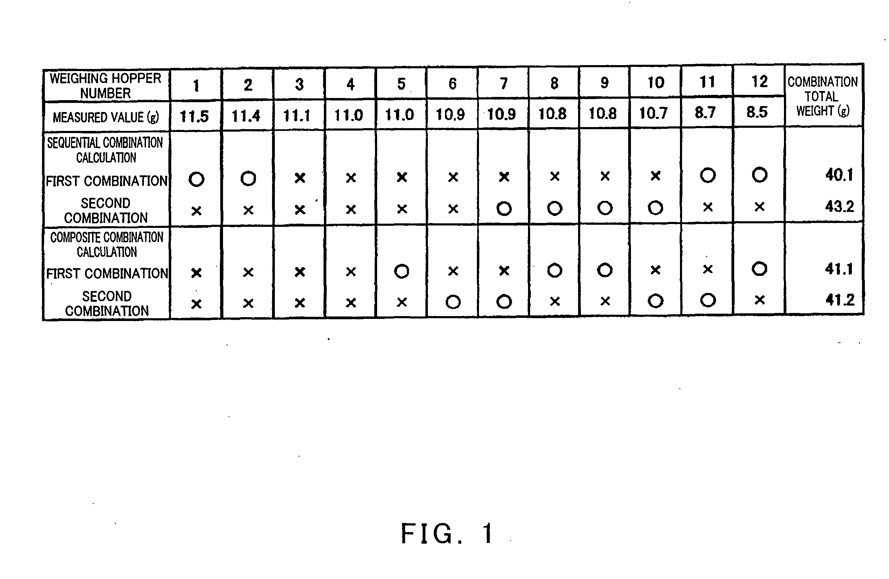

Fig. 1 shows an example in which two combinations each of which chooses four measured values from twelve measured values are selected by sequential combination calculation and by the composite combination calculation. For the sake of easier understanding, the measured values are arranged in descending numeric order, and numbers are assigned to the corresponding weighing hoppers. As can be clearly seen from Fig. 1, when the combination target weight is 40.0 grams, a combination total weight of a first combination (1, 2, 11, 12) is 40. 1 grams which is substantially equal to the combination target weight in the sequential combination calculation. However, a combination total weight of a second combination (7, 8, 9, 10) is 43.2 grams which is far from the combination target weight. A total of the errors is 3.3 grams.

In contrast, in the composite combination calculation, a combination total weight of a first combination (5, 8, 9, 12) is 41.1 grams and a combination total weight of a second combination (6, 7, 10, 11) is 41.2 grams. A total of the errors is 2.3 grams which is smaller than that resulting from the sequential combination calculation.

The above results may be attributed to the following. In the sequential combination calculation, only the remaining measured values excluding those of the first combination can be used to select the second combination. If the measured values are chosen to make the first combination closer to the combination target weight, then an error in the second combination becomes too large, resulting in a larger total error in some cases. That is, the composite combination selected by the sequential combination is not always an optimal composite combination (whose total error is smallest, for example.) On the other hand, in the composite combination calculation, an optimal composite combination (whose total error is smallest, for example.) is selected from all composite combinations. When a plurality of combinations are seen as a whole, the composite combination calculation can improve the weighing precision as compared to the sequential combination calculation.

The present invention has been made based on the above described findings, and can provide a combination weigher which is capable of improving the weighing precision without changing the number of ganged units or of reducing the number of ganged units while maintaining the weighing precision by performing the composite combination calculation.

As described above, the composite combination calculation has a problem that number of cases is larger than those of general methods. Nonetheless, with development of a computer technology in recent years, time spent to execute complex calculation does not significantly affect weighing cycles. The method that was unfeasible because of a huge calculation amount of the combination calculation in the past is now feasible. By way of example, dozen years or so ago, a system clock frequency of a microcomputer was 1 MHz to 2MHz, whereas it is commonly 2GHz to 3GHz in recent years. That is, 2000 to 3000 times higher-speed calculation has been realized in recent years.

In the past, since it was important to lessen the calculation time, a person skilled in the art could not imagine that the composite combination calculation was performed in the combination weigher. The reason is that in fact, a combination weigher which performs the composite combination calculation has not been put into practice yet. However, the present inventors have been motivated to conceive the invention by the fact that high calculation speed has made the combination weigher utilizing the composite combination calculation feasible. As can be clearly seen from Fig. 1, the precision of the combination weigher can be improved by the composite combination calculation. Thus, the present invention will dramatically raise a technical level of the combination weigher.

Now, a preferred embodiment of the present invention will be described with reference to the drawings.

**(Embodiment)**

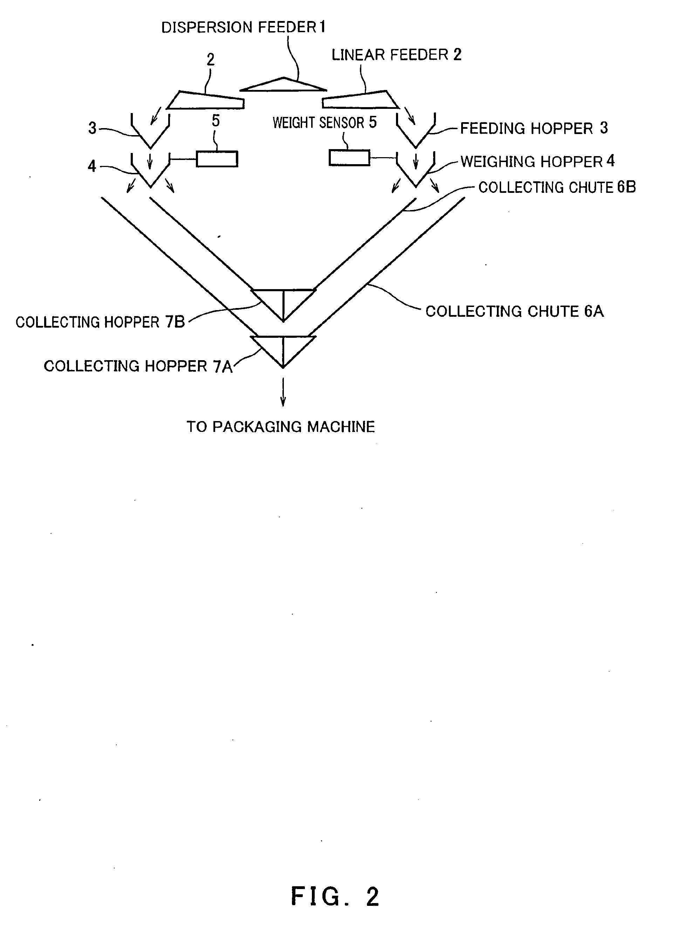

First of all, a hardware of a combination weigher according to an embodiment of the present invention will be described. Fig. 2 is a cross-sectional view of a schematic construction of the hardware of the combination weigher according to the embodiment of the present invention, as viewed from laterally.

The combination weigher according to the embodiment includes a dispersion feeder 1 having a conical shape which is disposed at a center of an upper part of the weigher to radially disperse objects to be weighed supplied from an external supplying device by vibration. Around the dispersion feeder 1, linear feeders 2 are provided to transfer the objects to be weighed sent from the dispersion feeder 1 to respective feeding hoppers 3 by vibration. A plurality of feeding hoppers 3 and weighing hoppers 4 are disposed below the linear feeders 2 and are arranged circularly in such a manner that each feeding hopper 3 and each weighing hopper 4 correspond to the associated one of the linear feeders 2. Each feeding hopper 3 receives the objects to be weighed sent from the linear feeder 2 and opens its gate to feed the objects to be weighed to the weighing hopper 4 located thereblow when the weighing hopper 4 becomes empty.

Each weighing hopper 4 is attached with a weight sensor 5 which measures the weight of the objects to be weighed inside the weighing hopper 4. A collecting chute 6A having an inverted conical shape is disposed below the weighing hoppers 4. Inward of the collecting chute 6A, a collecting chute 6B of a similar shape and a smaller size is disposed. Each weighing hopper 4 is provided at an outlet thereof with two gates configured to open outward and inward. Mounting positions of the gates are adjusted so that the objects to be weighed are fed to the collecting chute 6A by opening the outer gate and to the collecting chute 6B by opening the inner gate. Collecting hoppers 7A and 7B are mounted to lower ends of the collecting chutes 6A and 6B, respectively. By opening the collecting hopper 7A with the collecting hopper 7B closed, only the objects to be weighed which have been gathered by the collecting chute 6A are discharged. By opening the collecting hopper 7B and the collecting hopper 7A simultaneously after the objects to be weighed have been discharged from the collecting hopper 7A, the objects to be weighed which have been gathered by the collecting chute 6B are discharged to a packaging machine which is not shown. In Fig. 2, arrows indicate moving directions of the objects to be weighed.

In this embodiment, the dispersion feeder 1 and the linear feeders 2 are vibrated according to ON and OFF of electromagnets. The feeding hopper 3, and the collecting hoppers 7A and 7B are respectively provided at outlets thereof with openable and closable gates.

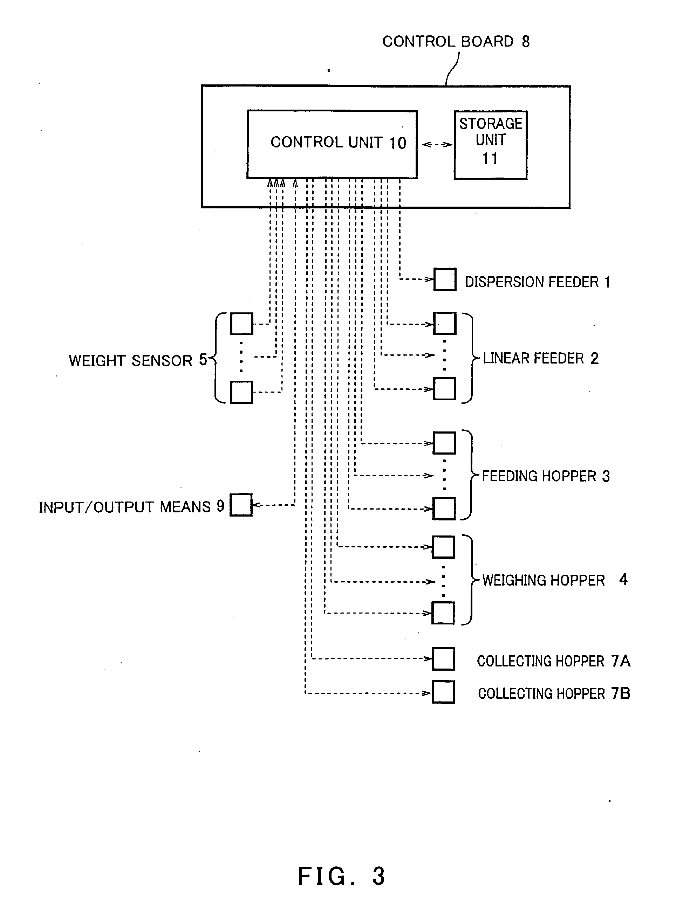

Subsequently, the control system will be described below. Fig. 3 is a block diagram showing a schematic configuration of the control system and the control board (controller) of the combination weigher according to the embodiment of the present invention. As shown in Fig. 3, the control system of the combination weigher according to this embodiment includes the weight sensors 5 each of which detects a weight of the objects to be weighed fed from the feeding hopper 3 to the weighing hopper 4, the dispersion feeder 1, the linear feeders 2, the feeding hoppers 3, the weighing hoppers 4, the collecting hoppers 7A and 7B, the control board 8, and the input/output means 9. The linear feeders 2, the feeding hoppers 3, the weighing hoppers 4, and the weight sensors 5 are equal in number. In this embodiment, the number is twelve, which is merely exemplary.

As the weight sensor 5 of the embodiment, a load cell is used, for example,.

As the control board 8, a microcomputer is used, for example. As the input/output means 9, a touch panel is used, for example. The input/output means 9 is not necessarily constructed of a single component, but may be constructed of an input means and an output means which are separately provided.

Subsequently, a configuration of the control board 8 will be described. As shown in Fig. 3, the control board 8 contains a control unit 10 and a storage unit 11. As the control unit 10, a CPU is used, for example. As the storage unit 11, an internal memory is used, for example. The control unit 10 and the storage unit 11 are interconnected. The control unit 10 receives signals from the weight sensors 5 and the input/output means 9, and sends signals to the dispersion feeder 1, the linear feeders 2, the feeding hoppers 3, the weighing hoppers 4, the collecting hoppers 7A and 7B, and the input/output means 9. In Fig. 3, arrows indicate signal transmission directions.

Subsequently, an operation of the control board 8 will be described with reference to Fig. 3. With the input/output means 9, parameters indicating combination target weight or a condition for determination as to a need for maintenance, and the like, are input to the control unit 10. The control unit 10 stores the received parameters and the like in the storage unit 11. The stored parameters and the like are read out by the control unit 10 and are output to the input/output means 9 as desired to enable a user to check them. The storage unit 11 contains programs for executing combination calculation, and the like. The control unit 10 receives a detection signal and the like from the weight sensor 5. The control unit 10 processes the received detection signal and the like using the programs stored in the storage unit 11. In addition, the control unit 10 sends control signals to the dispersion feeder 1, the linear feeders 2, the feeding hoppers 3, the weighing hoppers 4, and the collecting hoppers 7A and 7B, based on a result of processed signals. Furthermore, as desired, the control unit 10 sends the result to the input/output means 9. By the above described operation, the control board 8 detects and controls the weights of the objects to be weighed which are fed and discharged among the dispersion feeder 1, the linear feeders 2, the feeding hoppers 3, the weighing hoppers 4, and the collecting hoppers 7A and 7B, and causes the combination weigher to operate.

Subsequently, an operation of the combination weigher utilizing the composite combination calculation, which is a feature of the present invention, will be described. The combination weigher of this embodiment is equipped with twelve weighing hoppers and is configured to simultaneously select two combinations each of which chooses four weighing hoppers. In other words, the combination weigher selects one composite combination including two combinations each of which is made up of the four weighing hoppers. With respect to each of the combinations, a difference between a combination total weight and a combination target weight is calculated as an error, and a composite combination whose total error is smallest is selected. The number (number of ganged units) of weighing hoppers, the number of weighing hoppers which participate in a combination, the combination target weight, and a selecting condition of the composite combination are not intended to be limited. In the embodiment, the weighing hoppers correspond to discharge hoppers recited in claims.

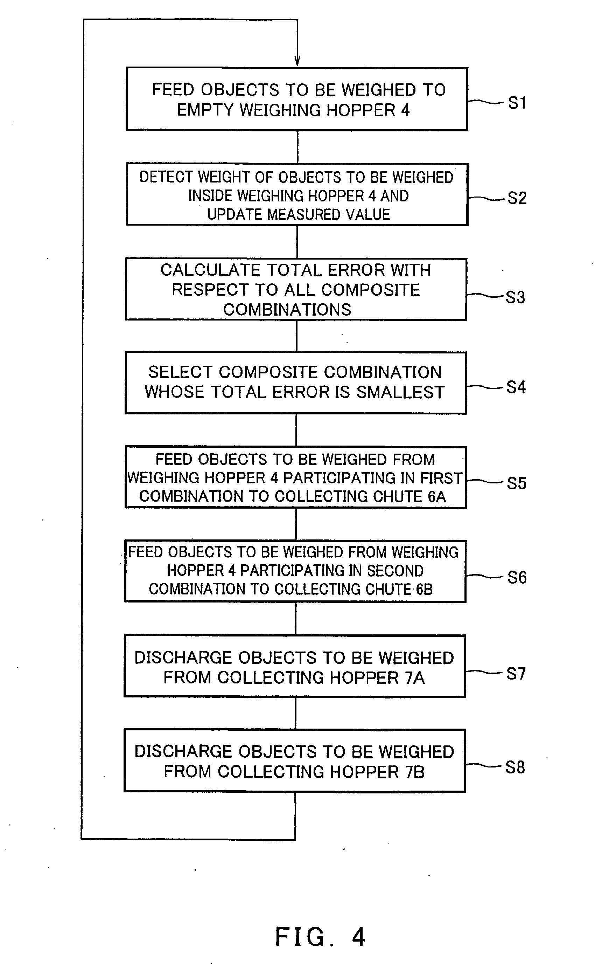

Fig. 4 is a flowchart showing an example of an operation program of the control board 8 of the combination weigher of this embodiment. Now, the operation of the combination weigher of this embodiment will be described with reference to Fig. 4.

First, the objects to be weighed are fed from the feeding hoppers 3 to the weighing hoppers 4 which are empty (step S1).

Subsequently, weights of the objects to be weighed which are held in the weighing hoppers 4 are detected, and thereby measured values are updated (step S2). The number of the measured values is equal to the number of weighing hoppers 4 and is twelve.

With respect to each of all composite combinations, a total error is calculated (step S3).

A composite combination (hereinafter referred to as an optimal composite combination) whose total error is smallest is selected (step S4).

The weighing hoppers 4 participating in a first combination included in the optimal composite combination feed the objects to be weighed to the collecting chute 6A (step S5).

The weighing hoppers 4 participating in a second combination included in the optimal composite combination feed the objects to be weighed to the collecting chute 6B (step S6).

The objects to be weighed are discharged from the collecting hopper 7A to the packaging machine (step S7).

Finally, the objects to be weighed are discharged from the collecting hopper 7B to the packaging machine (step S8). At this time, the collecting hopper 7A is kept open, in which case, the objects to be weighed discharged from the collecting hopper 7B are fed to the packaging machine through the collecting hopper 7A.

Thereafter, the feeding hoppers 3 feed the objects to be weighed to the weighing hoppers 4 which are empty (weighing hoppers 4 which have fed the objects to be weighed in step S5 and S6) (step S1).

In the combination weigher according to the embodiment of the present invention, the above described operation is performed, and a plurality of combinations whose total error is smallest can be simultaneously selected by the composite combination calculation. Therefore, the weighing precision can be improved without changing the number of ganged units, or the number of ganged units can be reduced while maintaining the weighing precision.

The total error need not be calculated for all the composite combinations. For example, in cases where combinations whose combination total weights are less than the combination target weight are excluded, the total error may be calculated with respect to only composite combinations including combinations whose combination total weights are not less than the combination target weight. In cases where a condition to inhibit discharge from combinations whose errors are more than a specified value is set, the total error may be calculated with respect to only composite combinations including only combinations whose errors are not more than the specified value. Without actually calculating total errors, it is in some cases obvious that total errors of composite combinations meeting a specific condition are not smallest. In those cases, it is not necessary to calculate the total errors with respect to those composite combinations meeting a specific condition. In any case, other methods may be employed provided that an optimal composite combination is selected from all composite combinations.

Whereas the composite combination whose total error is smallest is determined as the optimal composite combination in the embodiment, a composite combination meeting other condition may alternatively be determined as the optimal composite combination. To be specific, a composite combination including combinations whose errors are positive and whose total error is smallest may be determined as the optimal composite combination. Alternatively, a composite combination whose error square sum is smallest may be determined as the optimal composite combination. In a further alternative, to a latter condition, a condition in which combination total weights are not less than a specified weight may be added. In any case, other conditions may be used to select the optimal composite combination provided that one composite combination is selected from all composite combinations.

Moreover, the combination target weight may be varied for each of combinations included in the composite combinations. This enables the combination weigher to be adapted to cases where different combination target weights are discharged as a set.

The combination conditions may be as follows, for example. When a combination target weight of an I-th combination included in a composite combination is **TW(I)** and a combination total weight of each combination is **KW(I)**, a composite combination whose E value calculated according to:

$$E = \Sigma\, ABS\, (KW(I) - TW(I))\, \ldots\ldots\ldots(I = 1 \sim K)$$

is smallest is selected. This corresponds to the case where the composite combination whose total error is smallest is selected. The above formula may be replaced by the following formula:

$$E = \Sigma\, (KW(I) - TW(I))^2\, \ldots\ldots\ldots(I = 1 \sim K)$$

This corresponds to the case where the composite combination whose total error square is smallest is selected. Furthermore, under the condition of **KW(I)** $\geqq$ **TW(I)**, the following formula may be used:

$$E = \Sigma\, (KW(I) - TW(I))\, \ldots\ldots\ldots(I = 1 \sim K)$$

This corresponds to the case where the composite combination whose total error is smallest is selected from composite combinations consisting of combinations whose combination total weights are not less than the combination target weight. As should be appreciated, the condition for selecting the optimal composite combination is not limited.

The number of the weighing hoppers is not intended to be limited to twelve. The number of combinations to be selected simultaneously is not intended to be limited to two but may be three or more. The number of weighing hoppers which participate in one combination is not intended to be limited to four. For example, the number of weighing hoppers which participate in a combination may be varied in a range of one to twelve, and the composite combination calculation may be performed with respect to each of these cases. Moreover, the number of weighing hoppers which participate in combinations may be varied for each combination.

The weighing hoppers may be replaced by weighing feeders and memory hoppers. In this case, each weighing feeder is attached with a weight sensor, and a part of the objects to be weighed held in the weighing feeder are fed to the memory hopper. Reduction amounts of the weights of the weighing feeders correspond to the weights of the objects to be weighed fed to the memory hoppers, and based on these as the measured values, the composite combination calculation is performed. In this case, the memory hoppers correspond to the discharge hoppers recited in claims.

Hereinbelow, alternative examples of the embodiment will be described.

**[Alternative Example 1]**

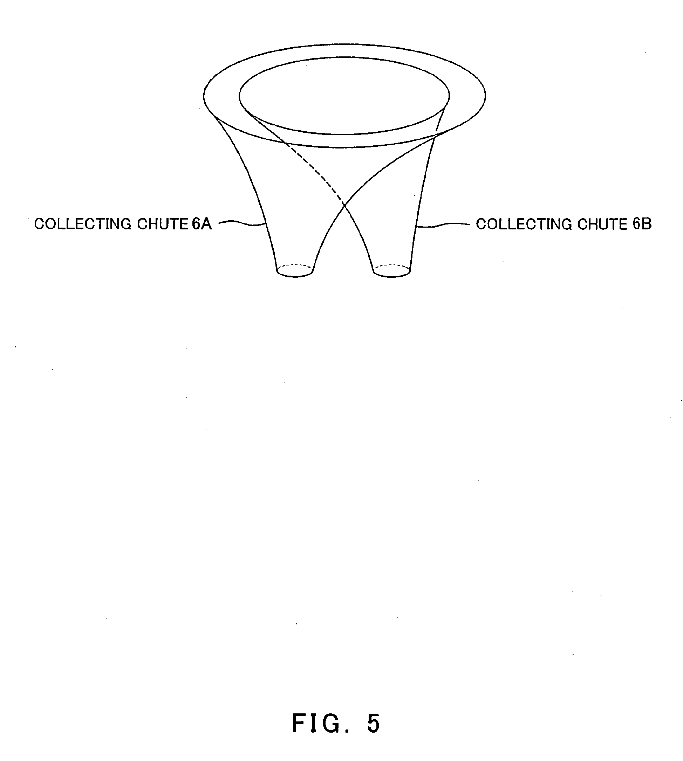

In the above described construction shown in Fig. 2 (hereinafter referred to as a basic construction), the collecting chutes 6A and 6B are disposed to be doubled in an inverted conical shape. In contrast, in this alternative example, a plurality of collecting chutes are configured to cross each other as shown in Fig. 5. This makes it possible to discharge the objects to be weighed simultaneously from the plurality of collecting chutes. Therefore, high-speed weighing and packaging are achieved in a packaging machine provided with a plurality of inlets. In that case, as a matter of course, the collecting hoppers may be provided at lower ends of the collecting chutes 6A and 6B.

**[Alternative Example 2]**

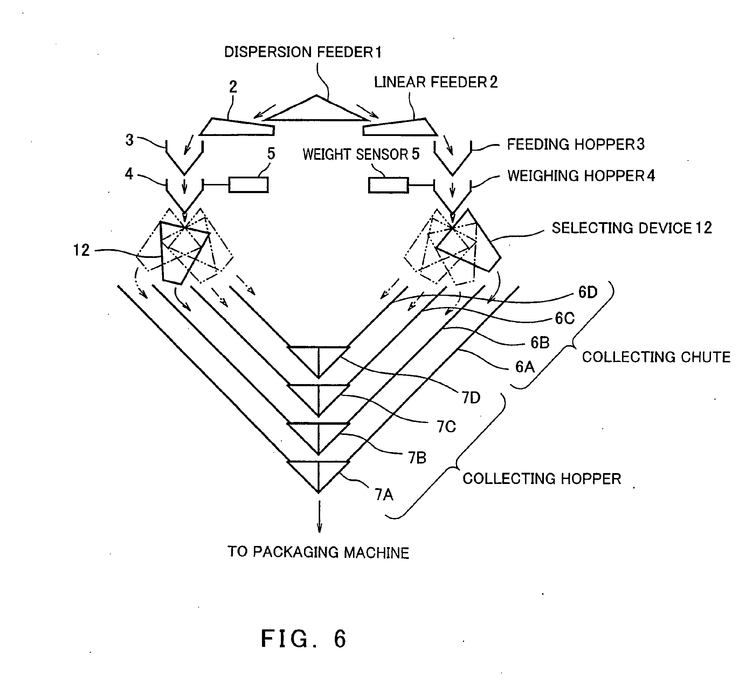

In this alternative example, the number of the collecting chutes and the number of collecting hoppers are three or more. The number of collecting chutes and the number of collecting hoppers may be equal to or different from the number of combinations to be selected simultaneously. In a case where the number of collecting chutes is three or more, it is necessary to selectively feed the objects to be weighed discharged from the weighing hopper 4 to one of the collecting chutes. To this end, a selecting device 12 may be disposed below the weighing hopper 4. Fig. 6 is a cross-sectional view showing a schematic construction of a combination weigher according to this alternative example, which is equipped with the selecting device 12, and four collecting chutes and four collecting hoppers, as viewed from laterally. In Fig. 6, arrows indicate moving directions of the objects to be weighed. With such a construction, the number of combinations to be selected simultaneously can be increased, enabling high-speed weighing.

The collecting chutes may be respectively provided with the collecting hoppers, or otherwise the outermost collecting chute need not be provided with the collecting hopper. This is the same in the basic construction. In this case, the objects to be weighed which have been fed to the outermost collecting chute are directly discharged.

**[Alternative Example 3]**

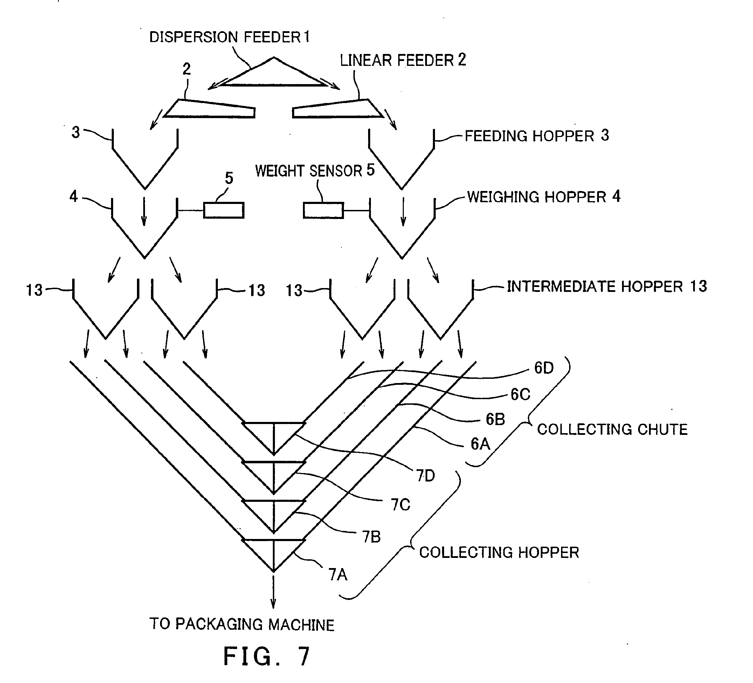

In this alternative example, intermediate hoppers 13 are disposed below the weighing hoppers 4. Fig. 7 is a cross-sectional view showing a schematic construction of a combination weigher according to this alternative example, which is equipped with the intermediate hoppers 13 and four collecting chutes and four collecting hoppers, as viewed from laterally. In Fig. 7, arrows indicate moving directions of the objects to be weighed. In such a construction, also, the objects to be weighed which have been discharged from the weighing hopper 4 can be fed selectively to one of the collecting chutes. Therefore, the number of combinations to be selected simultaneously is increased, enabling high-speed weighing. In this case, the weighing hoppers correspond to the discharge hoppers recited in claims, rather than the intermediate hoppers. This is because each intermediate hopper is configured to be opened and closed to select the collecting chute to which the objects to be weighed are to be fed, and not to hold the objects to be weighed inside thereof to participate in the combination calculation.

**[Alternative Example 4]**

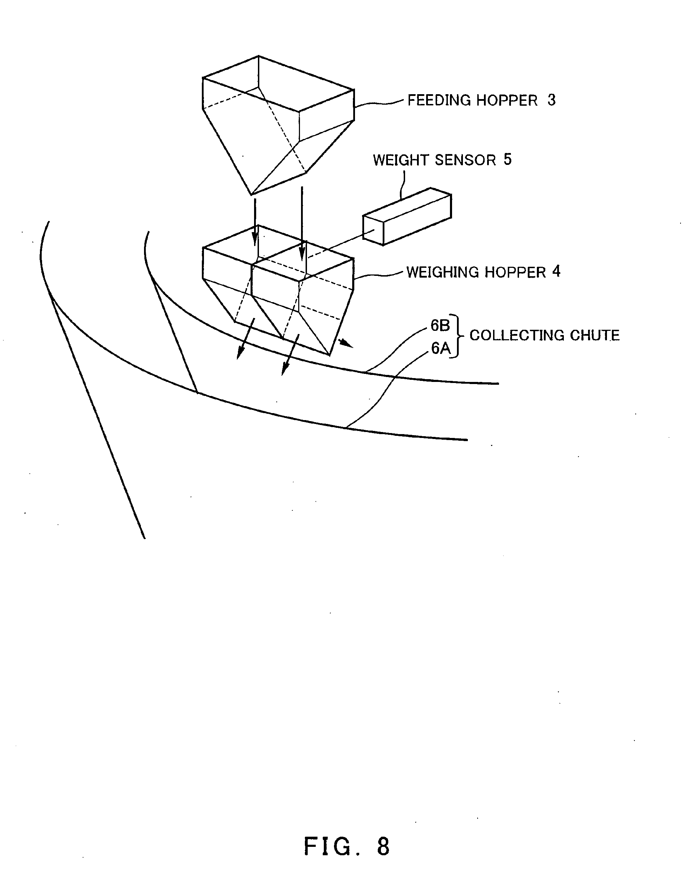

In this alternative example, the weighing hopper 4 is configured to include two chambers. Fig. 8 is a view schematically showing a part of a schematic construction of a combination weigher according to this alternative example. In Fig. 8, arrows indicate moving directions of the objects to be weighed. The feeding hopper 3 is provided with two gates which are selectively openable and closable. By opening one of the two gates, the objects to be weighed are fed to only one of the two chambers of the weighing hopper 4. The weight sensor 5 detects the weight of the weighing hopper 4. Based on an increase amount in the detected weight, the weight of the objects to be weighed which have been fed to each of the chambers is calculated. Each of the chambers of the weighing hopper 4 is provided with two gates which are selectively openable and closable. By opening one of the two gates, the objects to be weighed are fed selectively to the collecting chute 6A or to the collecting chute 6B. This makes it possible to significantly reduce the number of weighing hoppers and the number of weight sensors relative to the number of measured values.

**[Alternative Example 5]**

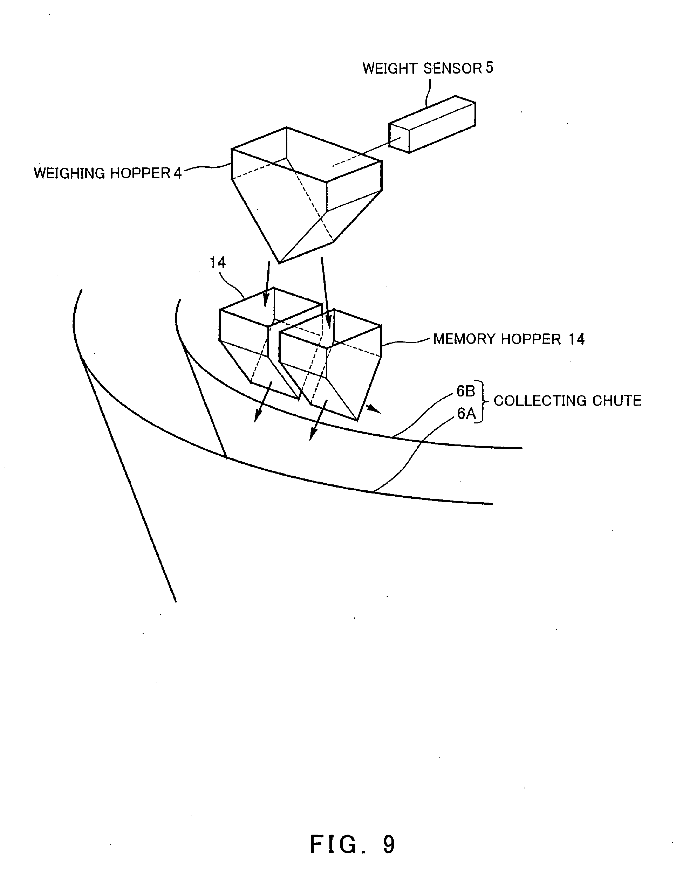

In this alternative example, a plurality of memory hoppers 14 are disposed below the weighing hopper 4. Fig. 9 is a view schematically showing a part of a schematic construction of the combination weigher according to this alternative example, in which two memory hoppers 14 are provided for each weighing hopper 4. In Fig. 9, arrows indicate moving directions of the objects to be weighed. The weighing hopper 4 is provided with two gates which are selectively openable and closable. By opening one of the two gates, the objects to be weighed are fed to only one of the memory hoppers 14. The memory hopper 14 is provided with two gates which are selectively openable and closable. By opening one of the two gates, the objects to be weighed are fed selectively to the collecting chute 6A or to the collecting chute 6B. The weight of the objects to be weighed held in the weighing hopper is stored as the weight of the objects to be weighed held in the memory hopper, and based on this as the measured value, the combination calculation is performed. In such a construction, the number of measured values (the number of memory hoppers) can be increased significantly relative to the number of weighing hoppers. In this case, the memory hoppers correspond to the discharge hoppers recited in claims.

**[Alternative Example 6]**

In this alternative example, a plurality of second collecting chutes and a plurality of second collecting hoppers are disposed below the collecting hoppers. It is desired that the number of second collecting chutes be less than the number of collecting chutes.

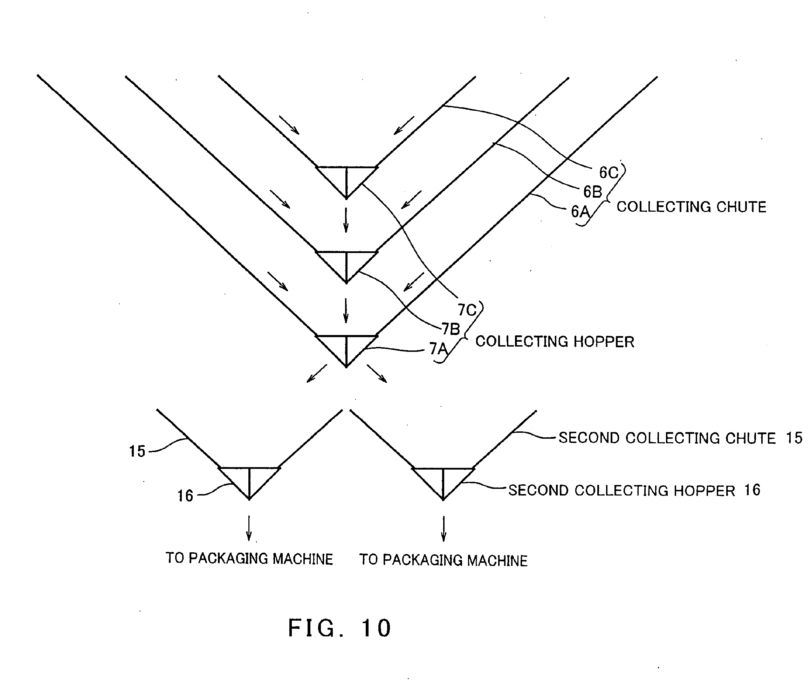

Fig. 10 is a view schematically showing a part of a schematic construction of a combination weigher according to the embodiment of the present invention, which is equipped with three collecting hoppers, two second collecting chutes and two second collecting hoppers. In Fig. 10, arrows indicate moving directions of the objects to be weighed. The collecting hopper is provided with two gates which are selectively openable and closable. By opening one of the gates, the objects to be weighed can be fed selectively to one of the plurality of second collecting chutes 15. Furthermore, the objects to be weighed are discharged from the second collecting hopper 16 into the packaging machine which is not shown. This makes it possible to discharge the objects to be weighed according to the inlet or timing of the packaging machine.

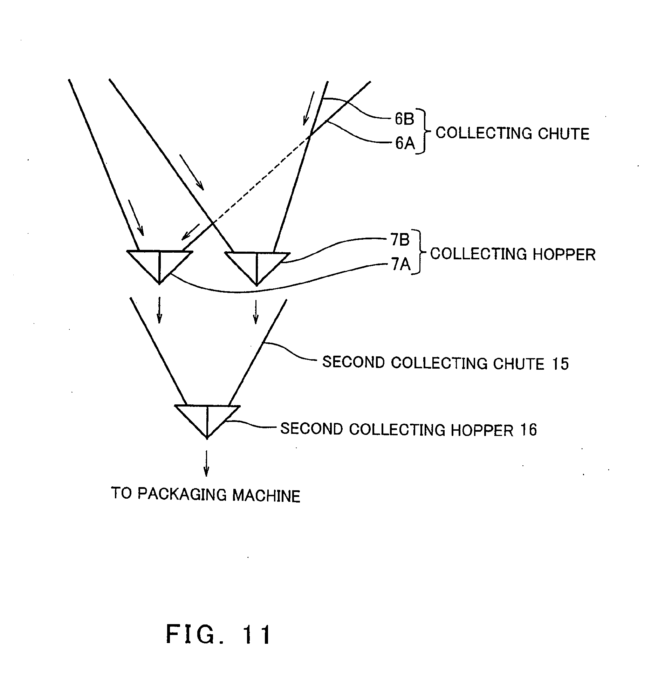

The number of the second collecting chutes may be one and the number of the collecting hoppers may be one. Fig. 11 is a view schematically showing a part of a schematic construction of the combination weigher according to the embodiment of the present invention, which is equipped with two collecting chutes, two collecting hoppers, one second collecting chute and one second collecting hopper. In Fig. 11, arrows indicate moving directions of the objects to be weighed. The collecting chutes 6A and 6B cross each other, and the collecting hoppers 7A and 7B are provided at lower ends thereof. The objects to be weighed which have been discharged from any of the collecting hoppers are gathered by the second collecting chute 15, and are discharged through the second collecting hopper 16 to the packaging machine which is not shown. This enables repeated high-speed discharge of the objects to be weighed from one hopper. That is, the combination weigher can be adapted to a packaging machine which is provided with one inlet and is able to operate at a high speed.

In the construction in which one second collecting chute and one second collecting hopper are equipped, the objects to be weighed held in the collecting hoppers may be discharged sequentially in one weighing cycle.

**[Alternative Example 7]**

In this alternative example, the combination weigher according to the embodiment is configured to perform double shift operation. An example of double shift will now be described. By way of example, using twelve out of twenty weighing hoppers, two combinations each made up of approximately four weighing hoppers are selected simultaneously and discharge the objects to be weighed (first shift). Subsequently, using approximately twelve weighing hoppers which are a sum of the approximately four weighing hoppers 4 remaining unselected in the first shift and eight weighing hoppers remaining unused in first combination calculation, two combinations each made up of approximately four weighing hoppers are selected simultaneously and discharge the objects to be weighed (second shift). During this time, the objects to be weighed are fed to the weighing hoppers which have discharged the objects to be weighed in the first shift. Then, using approximately twelve weighing hoppers which are a sum of the approximately four weighing hoppers 4 remaining unselected in the second shift and eight weighing hoppers remaining unused in the first combination calculation, the combination calculation and discharging in the first shift are performed again. During this time, the objects to be weighed are fed to the weighing hoppers which have discharged the objects to be weighed in the second shift. Thereafter, this is repeated. That is, in the double shift, using a part of the plurality of weighing hoppers, combinations which participate in an optimal composite combination are selected and discharge the objects to be weighed (first shift). Subsequently, using the remaining weighing hoppers, combinations which participate in an optimal composite combination are selected again and discharge the objects to be weighed (second shift). In the first shift, the objects to be weighed are fed to the weighing hoppers which have discharged the objects to be weighed in the second shift. In the second shift, the objects to be weighed are fed to the weighing hoppers which have discharged the objects to be weighed in the first shift. This is repeated thereafter.

The number of weighing hoppers, the number of weighing hoppers which participate in the combination calculation, and the number of weighing hoppers which participate in the combination are not intended to be limited. Instead of the double shift, any shift number may be used, including triple shift, fourth shift, etc. The number of combinations which participate in (are simultaneously selected for) the composite combination may be varied between different shifts. In any case, plural shifts enable high-speed weighing.

Numerous modifications and alternative embodiments of the invention will be apparent to those skilled in the art in view of the foregoing description. Accordingly, the description is to be construed as illustrative only, and is provided for the purpose of teaching those skilled in the art the best mode of carrying out the invention. The details of the structure and/or function may be varied substantially without departing from the spirit of the invention and all modifications which come within the scope of the appended claims are reserved.

**Industrial Applicability**

The combination weigher of the present invention is useful as a combination weigher which is capable of improving the weighing precision without changing the number of ganged units or of reducing the number of ganged units while maintaining the weighing precision.

**Claims**

1.   A combination weigher comprising:

a plurality of discharge hoppers which hold objects to be weighed;
weight detecting devices for detecting measured values of weights of the objects to be weighed which are held in or fed to the discharge hoppers; and
a controller;
wherein the controller is configured to select an optimal composite combination from composite combinations each of which chooses a plurality of combinations made up of the measured values such that elements of the measured values do not duplicate between the combinations.

2.   The combination weigher according to claim 1,
wherein the controller is configured to cause the discharge hoppers participating in the combinations forming the optimal composite combination to discharge the objects to be weighed simultaneously.

3.   The combination weigher according to claim 1, further comprising:

a plurality of collecting chutes.

4.   The combination weigher according to claim 1,
wherein the controller is configured to cause the discharge hoppers participating in the combinations forming the optimal composite combination to discharge the objects to be weighed simultaneously; and
wherein the number of combinations selected simultaneously is two and the number of collecting chutes is two.

5.   The combination weigher according to claim 4,
wherein each of the discharge hoppers is provided with two gates which are selectively openable and closable; and
wherein the controller is configured to select one of the gates to be opened to select one of the collecting chutes to which the objects to be weighed are fed.

6.   The combination weigher according to claim 3, further comprising:

a selecting device disposed below the discharge hoppers; wherein
the controller causes the selecting device to select one of the collecting chutes to which the objects to be weighed are fed.

7.   The combination weigher according to claim 3, further comprising:

intermediate hoppers disposed below the discharge hoppers; wherein
the controller causes the intermediate hopper to select one of the collecting chutes to which the objects to be weighed are fed.

8.   The combination weigher according to claim 3, further comprising:

collecting hoppers provided at the collecting chutes.

9.   The combination weigher according to 8, further comprising:

a second collecting chute disposed below the collecting hoppers; wherein the number of the second collecting chute is less than the number of combinations selected simultaneously.

**10.** The combination weigher according to claim 9,
wherein the number of the second collecting chute is one.

**11.** The combination weigher according to claim 10,
wherein the controller causes the collecting hoppers to sequentially discharge the objects to be weighed held therein in one weighing cycle.

**12.** The combination weigher according to claim 3,
wherein one of the collecting chutes is not provided with a collecting hopper and remaining collecting chutes are provided with collecting hoppers.

**13.** The combination weigher according to claim 1,
wherein a combination target weight corresponding to at least one combination is different from a combination target weight corresponding to another combination in combinations selected simultaneously.

**14.** The combination weigher according to claim 1, further comprising:

weighing hoppers; wherein the discharge hoppers are the weighing hoppers.

**15.** The combination weigher according to claim 14,
wherein each of the weighing hoppers includes two chambers.

**16.** The combination weigher according to claim 1, further comprising:

weighing hoppers; and
a plurality of memory hoppers provided for each of the weighing hoppers;
wherein the discharge hoppers are memory hoppers.

**17.** The combination weigher according to claim 1,
wherein the controller causes the combination weigher to perform a double shift operation.

**18.** The combination weigher according to claim 17,
wherein combinations selected simultaneously in first shift are equal in number to combinations selected simultaneously in second shift.

| WEIGHING HOPPER NUMBER | 1 | 2 | 3 | 4 | 5 | 6 | 7 | 8 | 9 | 10 | 11 | 12 | COMBINATION TOTAL WEIGHT (g) |
|---|---|---|---|---|---|---|---|---|---|---|---|---|---|
| MEASURED VALUE (g) | 11.5 | 11.4 | 11.1 | 11.0 | 11.0 | 10.9 | 10.9 | 10.8 | 10.8 | 10.7 | 8.7 | 8.5 | |
| SEQUENTIAL COMBINATION CALCULATION | | | | | | | | | | | | | |
| FIRST COMBINATION | O | O | × | × | × | × | × | × | × | × | O | O | 40.1 |
| SECOND COMBINATION | × | × | × | × | × | × | O | O | O | O | × | × | 43.2 |
| COMPOSITE COMBINATION CALCULATION | | | | | | | | | | | | | |
| FIRST COMBINATION | × | × | × | × | O | × | × | O | O | × | × | O | 41.1 |
| SECOND COMBINATION | × | × | × | × | × | O | O | × | × | O | O | × | 41.2 |

FIG. 1

EP 1 832 858 A1

DISPERSION FEEDER 1

LINEAR FEEDER 2

2

WEIGHT SENSOR 5

5

3 — FEEDING HOPPER 3

4 — WEIGHING HOPPER 4

COLLECTING CHUTE 6B

COLLECTING HOPPER 7B

COLLECTING CHUTE 6A

COLLECTING HOPPER 7A

TO PACKAGING MACHINE

# FIG. 2

CONTROL BOARD 8

CONTROL UNIT 10 ⟵⟶ STORAGE UNIT 11

DISPERSION FEEDER 1

WEIGHT SENSOR 5

LINEAR FEEDER 2

FEEDING HOPPER 3

INPUT/OUTPUT MEANS 9

WEIGHING HOPPER 4

COLLECTING HOPPER 7A

COLLECTING HOPPER 7B

FIG. 3

16

```
┌─────────────────────────────────────┐
│  FEED OBJECTS TO BE WEIGHED TO       │──── S1
│  EMPTY WEIGHING HOPPER 4             │
└─────────────────────────────────────┘
                 │
┌─────────────────────────────────────┐
│  DETECT WEIGHT OF OBJECTS TO BE      │
│  WEIGHED INSIDE WEIGHING HOPPER 4    │──── S2
│  AND UPDATE MEASURED VALUE           │
└─────────────────────────────────────┘
                 │
┌─────────────────────────────────────┐
│  CALCULATE TOTAL ERROR WITH          │
│  RESPECT TO ALL COMPOSITE            │──── S3
│  COMBINATIONS                        │
└─────────────────────────────────────┘
                 │
┌─────────────────────────────────────┐
│  SELECT COMPOSITE COMBINATION        │
│  WHOSE TOTAL ERROR IS SMALLEST       │──── S4
└─────────────────────────────────────┘
                 │
┌─────────────────────────────────────┐
│  FEED OBJECTS TO BE WEIGHED FROM     │
│  WEIGHING HOPPER 4 PARTICIPATING IN  │──── S5
│  FIRST COMBINATION TO COLLECTING     │
│  CHUTE 6A                            │
└─────────────────────────────────────┘
                 │
┌─────────────────────────────────────┐
│  FEED OBJECTS TO BE WEIGHED FROM     │
│  WEIGHING HOPPER 4 PARTICIPATING IN  │──── S6
│  SECOND COMBINATION TO COLLECTING    │
│  CHUTE 6B                            │
└─────────────────────────────────────┘
                 │
┌─────────────────────────────────────┐
│  DISCHARGE OBJECTS TO BE WEIGHED     │──── S7
│  FROM COLLECTING HOPPER 7A           │
└─────────────────────────────────────┘
                 │
┌─────────────────────────────────────┐
│  DISCHARGE OBJECTS TO BE WEIGHED     │──── S8
│  FROM COLLECTING HOPPER 7B           │
└─────────────────────────────────────┘
```

# FIG. 4

COLLECTING CHUTE 6A — COLLECTING CHUTE 6B

FIG. 5

FIG. 6

DISPERSION FEEDER 1
LINEAR FEEDER 2
FEEDING HOPPER 3
WEIGHING HOPPER 4
WEIGHT SENSOR 5
SELECTING DEVICE 12
COLLECTING CHUTE
COLLECTING HOPPER
TO PACKAGING MACHINE
6A 6B 6C 6D
7A 7B 7C 7D

DISPERSION FEEDER 1

LINEAR FEEDER 2

2

2

3

FEEDING HOPPER 3

5

WEIGHT SENSOR 5

4

5

WEIGHING HOPPER 4

13

13

13

INTERMEDIATE HOPPER 13

6D
6C
6B
6A

COLLECTING CHUTE

7D
7C
7B
7A

COLLECTING HOPPER

TO PACKAGING MACHINE

# FIG. 7

EP 1 832 858 A1

FEEDING HOPPER 3

WEIGHT SENSOR 5

WEIGHING HOPPER 4

6B ⎫
6A ⎭ COLLECTING CHUTE

FIG. 8

WEIGHT SENSOR 5

WEIGHING HOPPER 4

14

MEMORY HOPPER 14

6B
6A
COLLECTING CHUTE

# FIG. 9

FIG. 10

6C, 6B, 6A: COLLECTING CHUTE

7C, 7B, 7A: COLLECTING HOPPER

SECOND COLLECTING CHUTE 15

SECOND COLLECTING HOPPER 16

15

16

TO PACKAGING MACHINE

TO PACKAGING MACHINE

EP 1 832 858 A1

6B
6A } COLLECTING CHUTE

7B
7A } COLLECTING HOPPER

SECOND COLLECTING CHUTE 15

SECOND COLLECTING HOPPER 16

TO PACKAGING MACHINE

FIG. 11

## INTERNATIONAL SEARCH REPORT

| | International application No. |
| --- | --- |
| | PCT/JP2005/021356 |

**A. CLASSIFICATION OF SUBJECT MATTER**
*G01G19/387*(2006.01)

According to International Patent Classification (IPC) or to both national classification and IPC

**B. FIELDS SEARCHED**

Minimum documentation searched (classification system followed by classification symbols)
*G01G19/387*(2006.01)

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 7-1193 B  (Daiwa Seiko Kabushiki Kaisha), 11 January, 1995 (11.01.95), Full text; all drawings & US 4742877 A  & GB 2189614 A & DE 3700905 A1  & FR 2597974 A1 | 1-18 |
| X | JP 2645391 B  (Calbee Foods Co., Ltd.), 09 May, 1997 (09.05.97), Full text; all drawings (Family: none) | 1-18 |
| X | JP 2645392 B  (Calbee Foods Co., Ltd.), 09 May, 1997 (09.05.97), Full text; all drawings (Family: none) | 1-18 |

|  | Further documents are listed in the continuation of Box C. |  | See patent family annex. |

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 07 December, 2005 (07.12.05) | 20 December, 2005 (20.12.05) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI81395 B